# EUROPÄISCHE PATENTSCHRIFT

(11) **EP 3 038 988 B1**
(45) Veröffentlichungstag und Bekanntmachung des Hinweises auf die Patenterteilung: **01.05.2019**
(21) Anmeldenummer: 14761589.2
(22) Anmeldetag: 22.08.2014
(51) Int. Cl.: C03C 17/04, C03C 17/25, F21K 99/00

(54) **LICHTSTREUENDER KOLBEN FÜR EINE HALBLEITER-RETROFITLAMPE**
LIGHT-SCATTERING BULB FOR A SEMICONDUCTOR RETROFIT LAMP
AMPOULE DIFFUSANT LA LUMIÈRE POUR LAMPE DE REMPLACEMENT À SEMICONDUCTEUR

(30) Priorität: 27.08.2013 DE 102013217074
(43) Veröffentlichungstag der Anmeldung: 06.07.2016
(73) Patentinhaber: LEDVANCE GmbH, 85748 Garching (DE)
(72) Erfinder: KONRAD, Armin, 86845 Großaitingen (DE); SCHÖNHEITS, Markus, 86153 Augsburg (DE); WILLE, Christina, 86316 Friedberg (DE); SCHACHERER, Friedbert, 51688 Wipperfürth (DE)
(74) Vertreter: Nordmeyer, Philipp Werner
(86) Internationale Anmeldenummer: PCT/EP2014/067907
(87) Internationale Veröffentlichungsnummer: WO 2015/028403

(56) Entgegenhaltungen:
- EP-A2- 0 182 573
- EP-A2- 0 617 092
- DE-A1- 1 596 831
- US-A1- 2011 157 896

## Beschreibung

Die Erfindung betrifft einen lichtstreuenden Kolben für eine Halbleiter-Retrofitlampe, welcher Kolben eine hohlzylindrische Grundform aufweist. Die Erfindung betrifft auch eine Halbleiter-Retrofitlampe mit einem solchen Kolben, wobei in dem Kolben mindestens ein mit mindestens einer Halbleiterlichtquelle bestückter Träger untergebracht ist. Die Erfindung betrifft zudem ein Verfahren zum Herstellen eines solchen Kolbens. Die Erfindung ist insbesondere anwendbar auf Halbleiter-Retrofitlampen für Gasentladungsröhren und Linienlampen.

Für LED-Ersatzlampen oder "LED-Retrofitlampen", welche herkömmliche Gasentladungslampen oder Linienlampen durch einen Austausch ersetzen sollen, wird in einen hohlzylindrischen Kolben aus lichtstreuendem Kunststoff ein bandförmiger Träger mit darauf montierten Leuchtdioden (LEDs) eingeführt. Hierbei ist nachteilig, dass durch das Einführen des Trägers Kratzer in den Kolben eingebracht werden können, welche im Betrieb oder auch bei ausgeschalteter Lampe von außen sichtbar sind. Zudem benötigen solche LED-Retrofitlampen einen großen Kühlkörper, was deren großräumige Lichtabstrahlung aufwändig gestaltet.

DE 197 24 362 A1 offenbart ein Verfahren und eine Vorrichtung zum Beschlämmen und Trocknen von Glasrohren für herkömmliche zylinderförmige Lampen, wobei das Verfahren zur Beschichtung von Lampenrohren für Gasentladungslampen und zum Trocknen der Beschichtung dient und bei der für das Verfahren ausgelegten Vorrichtung die Lampenrohre während der Beschichtung und der Trocknung in einem schrägen Winkel zur Waagerechten angeordnet sind. Die Trocknung erfolgt durch Infrarotbestrahlung von außen bei gleichzeitiger Luftspülung des Lampenrohrinneren. Die Lampenrohre können nach Verlassen des Teils des Transportweges, an dem die Beschichtung durchgeführt wird, in den Bereich einer sich diagonal über den Transportweg und die Länge der Lampenrohre erstreckenden Infrarotstrahlungsheizung eintreten. Dort heizen Einzelelemente einer Strahlungsheizung jeweils einen Teil der Länge eines Lampenrohrs, wobei im zeitlichen Ablauf des Transports durch die Infrarotstrahlungsheizung zunächst das höher angeordnete Ende der Lampenrohre beheizt wird und dann Schritt für Schritt tieferliegende Teile der Lampenrohre bis zu ihrem unteren Ende beheizt werden. Bei solchen innenseitig beschichteten Glaskolben für herkömmliche Gasentladungslampen werden u.a. sehr homogene Streuschichten appliziert, die vor allem die anregende Quecksilberstrahlung mit der Hauptanregung bei 254 Nanometern streuen und so für eine effektive Leuchtstoffanregung sorgen. Nachteil bei solchen reinen Pulverschichten ist, dass diese das sichtbare Licht wenig streuen und so in LED-Retrofitlampen keine ausreichende Homogenisierung der Leuchtdichte bieten. Außerdem nachteilig ist die geringe mechanische Stabilität der Schichten, so dass diese beim Einführen von Bauteilen zerkratzt werden können.

Stand der Technik sind ebenso trübende/milchig weiße Schichten in Linien(glüh)lampen. Hier wird eine lichtstreuende, weiß deckende Schicht mit bleihaltigem Glasfluss als Basismaterial verwendet. Bleihaltige Glaslote haben den Vorteil, dass sie niedrige Erweichungstemperaturen besitzen, relativ kristallisationsstabil, überwiegend farblos und gut verarbeitbar sind. Die Schichten können, ähnlich den Pulverschichten über eine wässrige Suspension hergestellt werden.

US 2011/157896 A1, EP 0 617 092 A2 und EP 0 182 573 A2 offenbaren lichtstreuende Beschichtungen für Lampenkolben, bei denen lichtstreuende Partikel in eine Matrix eingebettet sind.

Es ist die **Aufgabe** der vorliegenden Erfindung, die Nachteile des Standes der Technik zumindest teilweise zu überwinden und insbesondere einen verbesserten Kolben für eine Halbleiter-Retrofitlampe, insbesondere zum Ersatz von Gasentladungsröhren und Linienlampen, bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch einen lichtstreuenden Kolben für eine Halbleiter-Retrofitlampe, welcher Kolben eine hohlzylindrische Grundform aufweist, wobei der Kolben einen Grundkörper aus Glas aufweist, der Grundkörper mit einer lichtstreuenden Schicht beschichtet ist und die lichtstreuende Schicht in einem lichtdurchlässigen Matrix-, Grund- oder Basismaterial verteilte Streupartikel aufweist, das Basismaterial ein anorganisches bleifreies Basismaterial ist und die Streupartikel anorganische Streupartikel sind.

Erfindungsgemäß besteht das lichtdurchlässige Basismaterial aus anorganischem, nanoporösem Al₂O₃ oder Al-Phosphat oder aus Mischungen daraus, welche insbesondere über ein Sol-Gel-Verfahren erzeugt worden sind.

Dadurch wird mit der Halbleiter-Retrofitlampe ein weitaus härterer, formstabilerer, UV-beständigerer Kolben verwendet als der herkömmliche Kunststoffkolben. Sichtbare Kratzer, die von einem Einschieben oder Aufsetzen des Trägers in den Kolben herrühren könnten, werden wirksam unterdrückt oder sogar ganz vermieden. Der Kolben weist den weiteren Vorteil auf, dass er in der Regel besser wärmeleitend ist als ein Kunststoffkolben und folglich eine effektivere Entwärmung des Kolbeninnenraums ermöglicht.

Der Träger mag beispielsweise eine Leiterplatte sein, z.B. eine FR4-Leiterplatte, oder, für eine noch effektivere Entwärmung der mindestens einen Halbleiterlichtquelle, eine Metallkernplatine. Der Träger mag insbesondere ein bandförmiger Träger sein.

Bevorzugterweise umfasst die mindestens eine Halbleiterlichtquelle mindestens eine Leuchtdiode. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (z.B. weiß) sein. Auch kann das von der mindestens einen Leuchtdiode abgestrahlte Licht ein infrarotes Licht (IR-LED) oder ein ultraviolettes Licht (UV-LED) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser aufweisen.

Es ist eine Ausgestaltung, dass die Streupartikel Aluminiumoxid aufweisen, insbesondere aus Aluminiumoxid bestehen. Dies ergibt den Vorteil einer Bereitstellung eines temperaturstabilen, ungiftigen und effektiven Streumaterials, insbesondere Pulvers. Die Streupartikel können ausschließlich Streupartikel aus Aluminiumoxid sein oder nur anteilig Streupartikel aus Aluminiumoxid aufweisen.

Es ist noch eine Ausgestaltung, dass die Streupartikel Titanoxid aufweisen, insbesondere aus Titanoxid bestehen. Titanoxid ist ebenfalls ein effektives, temperaturstabiles, ungiftiges und effektives Streumaterial.

Besonders bevorzugt wird eine Weiterbildung, bei der die lichtstreuende Schicht sowohl Streupartikel aus Aluminiumoxid als auch Streupartikel aus Titanoxid aufweist. Denn es hat sich überraschenderweise gezeigt, dass eine Streuwirkung oder Streueffektivität einer solchen Mischung höher ist, als ein gleicher Gewichtsanteil nur eines der Ausgangsstoffe. So kann beispielsweise Material eingespart werden, was eine besonders geringe Schichtdicke und/oder kostengünstige Herstellung erlaubt. Zudem sind beide Stoffe weiß, so dass sich auch bei einer Mischung keine Farbverfälschung ergibt.

Es ist eine Weiterbildung, dass ein Gewichtsanteil von Streupartikeln aus Aluminiumoxid und aus Titanoxid folgende relativen Werte oder Wertebereiche annehmen kann:

| Aluminiumoxid | Titanoxid |
|---|---|
| 1 | 0 |
| 0,95 | 0,05 |
| 0,9 | 0,1 |
| 0,8 | 0,2 |
| 0,7 | 0,3 |
| 0,6 | 0,4 |
| 0,55 | 0,45 |
| 0,5 | 0,5 |
| 0,45 | 0,55 |
| 0,4 | 0,6 |
| 0,3 | 0,7 |
| 0,25 | 0,75 |
| 0,2 | 0,8 |
| 0,15 | 0,85 |
| 0,1 | 0,9 |
| 0,05 | 0,95 |

Besonders bevorzugt wird ein Verhältnis zwischen 0,4 zu 0,6 und 0,6 zu 0,4.

Jedoch sind auch sämtliche Zwischenwerte einnehmbar.

Eine weitere Ausgestaltung ist die Verwendung von Halophosphat-Leuchtstoffen als Streupartikeln, die sehr kosteneffizient sind, sowie Mischungen davon z.B. mit Aluminiumoxid und/oder Titanoxid und/oder anderen Streupartikeln.

Desweiteren können die Streupartikel einen anorganischen Stoff oder ein anorganisches Stoffgemisch aufweisen oder daraus gebildet sein, beispielsweise Streupartikel aus Oxiden, wie CeO₂, Bi₂O₃, Y₂O₃, ZrO₂, SiO₂, ZnO, SnO₂ oder diverse Leuchtstoffe. Leuchtstoffe können dabei Oxide, Borate, Phosphate oder aber auch Nitride sein. Als Beispiele für Oxide seien hier dotiertes Y2O3, wie z.B. Y2O3:Gd, Eu, BaMgAl10O17:Eu, CeMGAl11O19:Tb,Ce, für Phosphate dotiere LaPO4 - Verbindungen wie LaPO4:Ce,Tb oder Ca10(PO4)6F2; Ca10(PO4)6F2:Sb; Ca10(PO4)6F2:Mn; Ca10(PO4)6F2; Ca10(PO4)6F2:Sb,Mn, für Borate SrB4O7:Eu und für Nitride CaN, SrSiN:Eu genannt. Die Streupartikel können jedoch auch als Glaspartikel ausgebildet sein, welche eine andere Brechzahl als das Basismaterial aufweisen.

Es ist eine weitere Ausgestaltung, dass die Größe der Streupartikel im Bereich von 0,1 bis 10 Mikrometern liegt.

Es ist noch eine Ausgestaltung, dass die Streupartikel zwischen 10 und 99,5 Gew.-% der lichtstreuenden Schicht ausmachen, insbesondere zwischen 40 und 90 Gew.-%, insbesondere zwischen 60 und 80 Gew.-%, beispielsweise abhängig von dem verwendeten Basismaterial. Durch den Anteil der Streupartikel können die Kratzfestigkeit der Schicht und/oder das Aussehen beeinflusst werden.

Das Basismaterial ist ein anorganisches bleifreies Basismaterial aus nanoporösem Aluminiumoxid und/oder Aluminiumphosphat. Das Basismaterial wird z.B. in Pulverform über eine wässrige Suspension aufgebracht und über einen Ausheizschritt verglast. Dabei bildet sich eine Glasschicht, die als Matrix für die Streupartikel wirkt. Durch die Glasmatrix wird die Haftung und Kratzfestigkeit der Streuschicht erreicht und somit auch die zerstörungsfreie Einführung und Auflage eines Trägers.

Vorteilhaft ist, dass die Glassysteme oder Glaslote in ihrer thermischen Dehnung sowie in ihren Erweichungstemperaturen an das Kolbenglas angepasst sind. Die thermische Dehnung sollte vorzugsweise im Bereich der thermischen Dehnung des Kolbenglases (z.B. typische Kalknatronsilikatgläser mit einem Wärmeausdehnungskoeffizienten von 8-10×10⁻⁶K⁻¹; passende Lotgläser mit einem Wärmeausdehnungskoeffizienten von 7-11×10⁻⁶K⁻¹) liegen. Das Glassystem sollte bevorzugt bei Temperaturen kleiner der Transformationstemperatur (z.B. von ca. 500°C)des Kolbenglases erweichen, zumindest muss gewährleistet sein, dass das Glaslotpulver bei Temperaturen verglast (versintert), bei denen sich das Trägerglas noch nicht verformt. Die Temperatur zum Einbrand sollte hoch genug sein, damit ein erstes Versintern der Pulverpartikel untereinender, sowie zu den Streupartikeln und zum Kolben stattfinden kann, und so eine ausreichende Haftung an dem Kolben gewährleistet ist.

Das lichtdurchlässige Basismaterial bestehend aus anorganischem, nanoporösem Al₂O₃ oder Al-Phosphat oder aus Mischungen daraus kann insbesondere über ein Sol-Gel-Verfahren erzeugt werden.

Es ist eine weitere Ausgestaltung, dass die Streuschicht eine Schichtdicke von ca. 1 bis 40 Mikrometern besitzt.

Es ist auch eine Ausgestaltung, dass der Kolben eine geradlinige oder gekrümmte hohlzylindrische Grundform aufweist. Diese ist besonders geeignet zur Verwendung mit länglichen Halbleiter-Retrofitlampen wie Gasentladungsröhren-Retrofitlampen oder Linienlampen-Retrofitlampen.

Es ist außerdem eine Ausgestaltung, dass die lichtstreuende Schicht an einer Innenseite des Grundkörpers aufgebracht ist. So ist die Schicht vor äußeren Einflüssen geschützt und besitzt von außen eine hochwertige Glasoberfläche.

Es ist eine zusätzliche oder alternative weitere Ausgestaltung, dass die lichtstreuende Schicht an einer Außenseite des Grundkörpers aufgebracht ist. So ist die Schicht vor einer Beschädigung durch den Träger geschützt.

Die Aufgabe wird auch gelöst durch eine Halbleiter-Retrofitlampe mit einem Kolben, wobei in dem Kolben mindestens ein mit mindestens einer Halbleiterlichtquelle bestückter Träger untergebracht ist, wobei der Glaskolben ein Glaskolben wie oben beschrieben ist. Die Halbleiter-Retrofitlampe, insbesondere eine Gasentladungsröhren-Retrofitlampe oder Linienlampen-Retrofitlampe, ergibt die gleichen Vorteile wie der Kolben und kann analog ausgestaltet sein.

Es ist eine Ausgestaltung davon, dass der Träger auf dem Kolben aufliegt. Der Träger kann direkt auf dem Kolben aufliegen. Für eine besonders gute Entwärmung der mindestens einen Halbleiterlichtquelle wird es bevorzugt, dass der Träger über einen Kühlkörper bzw. Wärmespreizelement auf dem Kolben aufliegt. Der Kühlkörper mag beispielsweise eine zylinderschnittartige Form aufweisen. Der Kühlkörper mag insbesondere flächig auf einer Innenseite des Kobens aufliegen. Der Kühlkörper mag zur besonders effektiven Entwärmung insbesondere mindestens 90% der Länge des Kolbens einnehmen. Der Kühlkörper mag z.B. aus Aluminium bestehen. Die Ausgabe wird auch gelöst durch ein Verfahren zum Herstellen eines Kolbens wie oben beschrieben, wobei das Verfahren mindestens die folgenden Schritte aufweist: (i) Beschlämmen des Basiskörpers aus Glas mit einem Beschichtungsmittel, welches ein Ausgangsmaterial zur Herstellung der lichtstreuenden Schicht des Kolbens ist; (ii) abschnittsweises Trocknen des Beschichtungsmittels zur Umwandlung in die lichtstreuende Schicht, wobei das Trocknen zeitlich versetzt in Fließrichtung des Beschichtungsmittels durchgeführt wird. Dadurch wird eine besonders gleichmäßige Schichtdicke der lichtstreuenden Schicht erreicht.

Dem Trocknen schließt sich ein Einbrennen des getrockneten Beschichtungsmittels an. Das Einbrennen erfolgt bei Temperaturen zwischen 400 und 600 °C, bevorzugt in einem Durchlaufofen kurzzeitig bei Temperaturen zwischen 500 und 600°C. Während des Einbrennens werden organische Bestandteile (zum Beispiel Binder usw.) beseitigt und es bildet sich das transparente anorganische Matrixmaterial heraus. Dieses kann amorph oder auch teilkristallin oder kristallin sein. Es kann Poren enthalten. Es kann eine ausreichende Haftung gewährleisten.

Die Beschichtung und Trocknung mag insbesondere mittels eines Verfahrens und/oder mit Hilfe einer Vorrichtung nach DE 197 24 362 A1 durchgeführt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.
- Fig.1: zeigt in einer Schrägansicht einen erfindungsgemäßen lichtstreuenden Kolben für eine Halbleiter-Retrofitlampe;
- Fig.2: zeigt als Schnittdarstellung in Vorderansicht eine Halbleiter-Retrofitlampe gemäß einem ersten Ausführungsbeispiel;
- Fig.3: zeigt als Schnittdarstellung in Vorderansicht eine Halbleiter-Retrofitlampe gemäß einem zweiten Ausführungsbeispiel;
- Fig.4: zeigt als Schnittdarstellung in Vorderansicht eine Halbleiter-Retrofitlampe gemäß einem dritten Ausführungsbeispiel; und
- Fig.5: zeigt Verfahrensschritte eines Verfahrens zum Herstellen eines erfindungsgemäßen lichtstreuenden Kolbens.

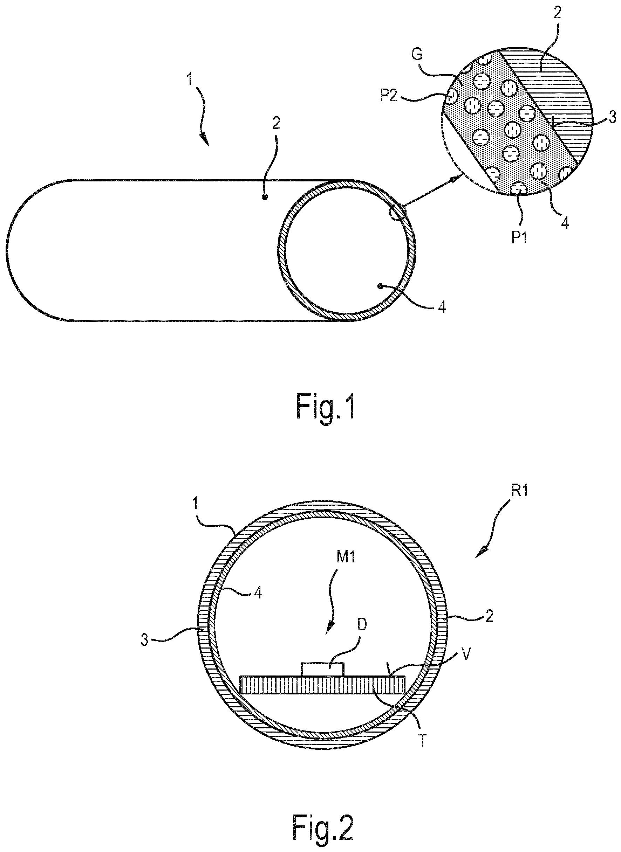

**Fig.1** zeigt in einer Schrägansicht einen erfindungsgemäßen lichtstreuenden (bzw. diffus lichtdurchlässigen oder opaken) Kolben 1 für eine Halbleiter-Retrofitlampe. Die Halbleiter-Retrofitlampe mag beispielsweise eine LED-Retrofitlampe zum Ersatz einer Gasentladungslampe oder einer Linienlampe sein. Der diffus lichtdurchlässige Kolben 1 weist eine geradlinige hohlzylindrische oder rohrförmige Grundform auf.

Der Kolben 1 weist, wie auch in einer ausschnittsweisen Vergrößerung gezeigt, einen Grundkörper 2 aus transparentem oder opakem Glas mit gleicher Grundform auf, welcher Grundkörper 2 hier an seiner Innenseite 3 ganzflächig mit einer lichtstreuenden Schicht 4 beschichtet ist. Die lichtstreuende Schicht 4 weist hier nicht erfindungsgemäß bleifreien Glasfluss G als sein Grund- oder Basismaterial auf, in welches Streupartikel P1 und P2 verteilt eingebettet sind. Glasfluss G ist ein für sichtbares Licht transparentes Glas, welches durch das Einbrennen weitgehend dicht gesintert ist und kaum Kristalle aufweist. Eine mittlere Korngröße D50 des verwendeten Glaspulvers liegt zwischen 1 und 4 Mikrometern.

Die Streupartikel P1, P2 sind für eine besonders effektive Lichtstreuung eine Mischung aus Streupartikeln P1 aus Aluminiumoxid und Streupartikeln P2 aus Titanoxid, z.B. in einem Gewichtsverhältnis von 50:50. Beide Arten von Streupartikeln P1, P2 machen einen Anteil zwischen 70 und 80 Gew.-% an der lichtstreuenden Schicht 4 aus. Als nicht erfindungsgemäßes lichtdurchlässiges Basismaterial wird beispielsweise ein Glasflusssystem Bi₂O₃-B₂O₃-ZnO-SiO₂ mit einem WAK von 8,4×10⁻⁶K⁻¹ und einem Erweichungsbeginn von ca. 440°C verwendet.

**Fig.2** zeigt als Schnittdarstellung in Vorderansicht eine Halbleiter-Retrofitlampe R1 gemäß einem ersten Ausführungsbeispiel. Die Halbleiter-Retrofitlampe R1 weist den Kolben 1 auf, in welchem ein Halbleitermodul (das z.B. auch als "Light Engine" bezeichnet werden kann) in Form eines LED-Moduls M1 untergebracht ist. Das LED-Modul M1 weist einen bandförmigen Träger T auf, welcher längs in dem Kolben 1 untergebracht ist und auf diesem aufsitzt. Der Träger T mag z.B. eine FR4-Platine oder eine Metallkernplatine sein. Eine Vorderseite V des Trägers T ist mit mehreren in Reihe entlang seiner Längserstreckung angeordneten Halbleiterlichtquellen in Form von LEDs D bestückt. Jedoch kann der Träger T auch beidseitig mit LEDs D bestückt sein.

Dadurch, dass die lichtstreuende Schicht 4 viel härter ist als der Träger T, wird die lichtstreuende Schicht 4 durch den Einsatz des Trägers T nicht beschädigt. Zudem weisen das Glas und der nicht erfindungsgemäße Glasfluss G des Kolbens 1 eine erheblich höhere Wärmeleitfähigkeit auf als der bisher für Kolben verwendete Kunststoff. Während Glas eine typische Wärmeleitfähigkeit zwischen 0,80 und 1,10 W/(m·K) aufweist, liegt die Wärmeleitfähigkeit typischerweise verwendeter Kunststoffe unter 0,25 W/(m·K). Folglich wird durch den Kolben 1 eine verbesserte Abfuhr der Abwärme der LEDs D erreicht.

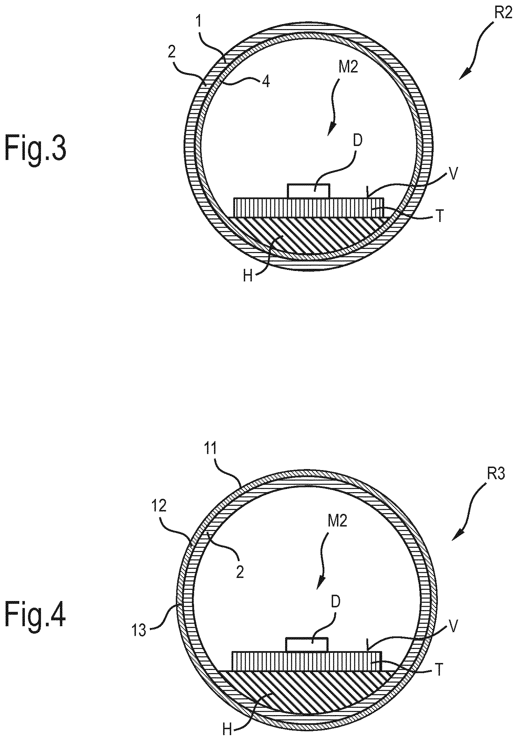

**Fig.3** zeigt als Schnittdarstellung in Vorderansicht eine Halbleiter-Retrofitlampe R2 gemäß einem zweiten Ausführungsbeispiel. Die Halbleiter-Retrofitlampe R2 weist ebenfalls den Kolben 1 auf, in welchem nun ein LED-Modul M2 untergebracht ist. Das LED-Modul M2 weist ebenfalls einen bandförmigen Träger T auf, welcher längs in dem Kolben 1 untergebracht ist. Der Träger T sitzt aber nun mit seiner Rückseite auf einem zylindersegmentförmigen Kühlkörper H auf, welcher Kühlkörper H auf dem Kolben 1 aufliegt. Der Träger T sitzt also indirekt (über Kühlkörper H) auf dem Kolben 1 auf. Die Halbleiter-Retrofitlampe R2 ermöglicht eine besonders effektive Wärmespreizung der von LEDs D erzeugten Abwärme sowie Wärmeabgabe durch den Kolben 1.

**Fig.4** zeigt als Schnittdarstellung in Vorderansicht eine Halbleiter-Retrofitlampe R3 gemäß einem dritten Ausführungsbeispiels. Die Halbleiter-Retrofitlampe R3 ist ähnlich zu der Halbleiter-Retrofitlampe R2 aufgebaut, außer dass der Kolben 11 die lichtstreuende Schicht 12 an der Außenseite 13 des Grundkörpers 2 aufweist. Da auch das Glas des Grundkörpers 2 viel härter ist als der Träger T, wird auch der Grundkörper 2 durch den Einsatz des Trägers T nicht beschädigt. Die wie die lichtstreuende Schicht 4 zusammengesetzte lichtstreuende Schicht 12 ist widerstandfähig gegenüber äußeren mechanischen und/oder chemischen Einflüssen.

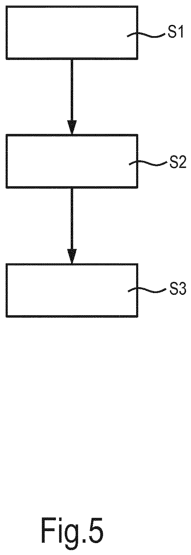

**Fig.5** zeigt Verfahrensschritte S1 bis S3 eines Verfahrens zum Herstellen beispielsweise des lichtstreuenden Kolbens 1 oder 11.

In einem ersten Schritt S1 wird der Grundkörper 2 mit Beschichtungsmittel beschlämmt, z.B. indem das Beschichtungsmittel von oben auf die Innenseite 3 des schräg stehenden, rotierenden Grundkörpers 2 aus Glas aufgegeben wird und den Grundkörper 2 herunterläuft, z.B. wie in DE 197 24 362 A1 beschrieben.

Das Beschlämmungsmittel mag insbesondere eine wässrige Suspension aus Glaspulver mit darin dispergierten Streupartikeln sein, dem ggf. noch Zusätze hinzugegeben worden sind, z.B. Fließhilfen, Binder, Tenside.

Nicht erfindungsgemäß mag die Suspension folgende Zusammensetzungen aufweisen:
Beispiel 1 (nicht erfindungsgemäß):
   Wasser: maximal 75 Gew.-%
   Dispergierhilfsmittel: maximal 0,3 Gew.-%
   Glasfluss: zwischen 15-20 Gew.-%
   Titanoxid (d₅₀=0,3-0,5µm): 5-10 Gew.-%
   wasserlösliches Harz: zwischen 0,5-2 Gew.-%
   Surfaktant: maximal 500ppm
Beispiel 2 (nicht erfindungsgemäß):
   Wasser: maximal 75 Gew.-%
   Dispergierhilfsmittel: maximal 0,3 Gew.-%
   Glasfluss: zwischen 15-20 Gew.-%
   Titanoxid (d₅₀=0,3-0,5 µm): 5-10 Gew.-%
   Aluminiumoxid (d₅₀ ca. 1,1 µm): 3-10 Gew.%
   wasserlösliches Harz: zwischen 0,5-2 Gew.-%
   Surfaktant: maximal 500ppm

Alternativ zu den Glaspulvern kann die Beschichtungssuspension Precursoren enthalten, die ein anorganisches Netzwerk bilden können. Dazu zählen z.B. organische Metallalkoholate (z.B. Al(OR)₃, wie Aluminium-tri-sukundär-butylat ASB oder Aluminium-tri-isopropylat ATIP für ein Al₂O₃-Netzwerk. Möglich sind auch anorganische Vorstufen, die kolloidale Lösungen bilden (ALOOH, Al(OH)₃-Supensionen, Aluminiummonophosphatlösungen usw.).

In einem zweiten Schritt S2 wird der mit dem Beschlämmungsmittel versehene Grundkörper 2 abschnittsweise von oben nach unten getrocknet, also zeitlich versetzt in Fließrichtung des Beschichtungsmittels, wie z.B. in DE 197 24 362 A1 beschrieben. Durch das abschnittsweise Trocknen wird eine besonders gleichmäßige Schichtdicke des dann trockenen Beschlämmungsmittels erreicht. Dies stellt eine Vorstufe oder einen Teilschritt auf dem Weg zur Herstellung der lichtstreuenden Schicht 4 dar.

In einem dritten Schritt S3 wird der mit dem getrockneten Beschlämmungsmittel versehene Grundkörper 2 in einen Ofen gegeben, um dort das getrocknete Beschlämmungsmittel zu brennen. Durch das Brennen wird die lichtstreuende Schicht 4 fertiggestellt. Das Beschlämmungsmittel stellt also ein Ausgangsmaterial zur Herstellung der lichtstreuenden Schicht 4 dar.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: lichtstreuender Kolben
- 2: Grundkörper aus Glas
- 3: Innenseite des Kolbens
- 4: lichtstreuende Schicht
- 11: Kolben
- 12: lichtstreuende Schicht
- 13: Außenseite des Kolbens
- D: LED
- G: lichtdurchlässiges anorganisches Basismaterial
- H: Kühlkörper
- M1: LED-Modul
- M2: LED-Modul
- P1: Streupartikel aus Aluminiumoxid
- P1: Streupartikel aus Titanoxid
- R1: LED-Retrofitlampe gemäß dem ersten Ausführungsbeispiel
- R2: LED-Retrofitlampe gemäß dem zweiten Ausführungsbeispiel
- R3: LED-Retrofitlampe gemäß dem dritten Ausführungsbeispiel
- S1: erster Schritt eines Herstellungsverfahrens
- S2: zweiter Schritt eines Herstellungsverfahrens
- S3: dritter Schritt eines Herstellungsverfahrens
- T: Träger
- V: Vorderseite des Trägers

## Patentansprüche

1. Lichtstreuender Kolben (1; 11) für eine Halbleiter-Retrofitlampe (R1; R2; R3), welcher Kolben (1; 11) eine hohlzylindrische Grundform aufweist, wobei
- der Kolben (1; 11) einen Grundkörper (2) aus Glas aufweist,
- der Grundkörper (2) mit einer lichtstreuenden Schicht (4) beschichtet ist und
- die lichtstreuende Schicht (4) in einem lichtdurchlässigen Basismaterial verteilte Streupartikel (PI, P2) aufweist,
- das Basismaterial ein anorganisches bleifreies Basismaterial (G) ist und
- die Streupartikel (PI, P2) anorganische Streupartikel sind,
**dadurch gekennzeichnet, dass** das lichtdurchlässige Basismaterial aus nanoporösem Aluminiumoxid und/oder Aluminiumphosphat besteht.

2. Kolben (1; 11) nach Anspruch 1, wobei die Streupartikel (P1, P2) Aluminiumoxid (P1) aufweisen.

3. Kolben (1; 11) nach Anspruch 1, wobei die Streupartikel (P1, P2) Titanoxid aufweisen.

4. Kolben (1; 11) nach Anspruch 1, wobei die Streupartikel (P1, P2) Phosphat, Borat oder Nitrid aufweisen.

5. Kolben (1; 11) nach einem der vorhergehenden Ansprüche, wobei die Streupartikel (P1, P2) zwischen 10 und 99,5 Gew.-% der lichtstreuenden Schicht (4) ausmachen, insbesondere zwischen 40 und 90 Gew.-%, insbesondere zwischen 60 und 80 Gew.-%.

6. Kolben (1; 11) nach einem der vorhergehenden Ansprüche, wobei eine mittlere Größe der Streupartikel zwischen 0,1 und 10 Mikrometern liegt.

7. Kolben (1; 11) nach einem der vorhergehenden Ansprüche, wobei die lichtstreuende Schicht (4) an einer Innenseite (3) des Grundkörpers (2) aufgebracht ist.

8. Kolben (1; 11) nach einem der vorhergehenden Ansprüche, wobei die lichtstreuende Schicht (4) an einer Außenseite (13) des Grundkörpers (2) aufgebracht ist.

9. Halbleiter-Retrofitlampe (R1; R2 ; R3) mit einem Kolben (1; 11), wobei in dem Kolben (1; 11) mindestens ein mit mindestens einer Halbleiterlichtquelle (D) bestückter Träger (T) untergebracht ist und wobei der Kolben ein Kolben (1; 11) nach einem der Ansprüche 1 bis 8 ist.

10. Halbleiter-Retrofitlampe (R1) nach Anspruch 9, wobei der Träger (T) auf dem Kolben (1) aufliegt.

11. Halbleiter-Retrofitlampe (R2; R3) nach Anspruch 10, wobei der Träger (T) über einen Kühlkörper (H) auf dem Kolben (1) aufliegt.

12. Verfahren zum Herstellen eines Kolbens (1; 11) nach einem der vorhergehenden Ansprüche, wobei das Verfahren mindestens die folgenden Schritte aufweist:
- Beschlämmen des Grundkörpers (2) aus Glas mit einem Beschichtungsmittel , welches ein Ausgangsmaterial zur Herstellung der lichtstreuenden Schicht (4) des Kolbens (1; 11) ist;
- Abschnittsweises Trocknen des Beschichtungsmittels zur Umwandlung in die lichtstreuende Schicht (4), wobei das Trocken zeitlich versetzt in Fließrichtung des Beschichtungsmittels durchgeführt wird, und
- Ausheizen des Kolbens (1; 11) bei ca. 400°C bis 600°C.

## Claims

1. Light-diffusing bulb (1; 11) for a semiconductor retrofit lamp (R1; R2; R3), which bulb (1; 11) has a hollow cylindrical shape, wherein
- the bulb (1; 11) comprises a base body (2) made of glass,
- the base body (2) is coated with a light-scattering layer (4), and
- the light-scattering layer (4) comprises scattering particles (P1, P2) distributed in a light-transmissive base material,
- the base material is an inorganic lead-free base material (G), and
- the scattered particles (PI, P2) are inorganic scattered particles,
**characterized in that** the light-transmissive base material consists of nanoporous aluminum oxide and/or aluminum phosphate.

2. Bulb (1; 11) according to claim 1, wherein the scattering particles (P1, P2) comprise alumina (P1).

3. Bulb (1; 11) according to claim 1, wherein the scattering particles (P1, P2) comprise titanium oxide.

4. Bulb (1; 11) according to claim 1, wherein the scattering particles (P1, P2) comprise phosphate, borate or nitride.

5. Bulb (1; 11) according to one of the preceding claims, wherein the scattering particles (P1, P2) constitute between 10 and 99.5 wt.% of the light scattering layer (4), in particular between 40 and 90 wt.%, in particular between 60 and 80 wt.%.

6. Bulb (1; 11) according to one of the preceding claims, wherein an average size of the scattering particles is between 0.1 and 10 micrometers.

7. Bulb (1; 11) according to one of the preceding claims, the light-diffusing layer (4) being applied to an inner side (3) of the base body (2).

8. Bulb (1; 11) according to one of the preceding claims, the light-scattering layer (4) being applied to an outer side (13) of the base body (2).

9. Semiconductor retrofit lamp (R1; R2; R3) having a bulb (1; 11), at least one carrier (T) fitted with at least one semiconductor light source (D) being accommodated in the bulb (1; 11), and the bulb being a bulb (1; 11) according to one of the claims 1 to 8.

10. Semiconductor retrofit lamp (R1) according to claim 9, the carrier (T) resting on the bulb (1).

11. Semiconductor retrofit lamp (R2; R3) according to Claim 10, the carrier (T) resting on the bulb (1) via a heat sink (H).

12. Method of manufacturing a piston (1; 11) according to one of the preceding claims, the method comprising at least the following steps:
- Coating the glass base body (2) with a coating agent which is a starting material for producing the light-scattering layer (4) of the bulb (1; 11);
- Section-by-section drying of the coating agent for conversion into the light-scattering layer (4), the drying being carried out temporally offset in the direction of flow of the coating agent, and
- Baking out the bulb (1; 11) at approx. 400°C to 600°C.

## Revendications

1. Ampoule diffusant la lumière (1; 11) pour une lampe de remplacement à semi-conducteur (R1 ; R2 ; R3), laquelle ampoule (1; 11) présente une forme de base cylindrique creuse, dans laquelle
- l'ampoule (1 ; 11) présente un corps de base (2) en verre,
- le corps de base (2) est revêtu d'une couche diffusant la lumière (4) et
- la couche diffusant la lumière (4) présente des particules de diffusion (P1, P2) réparties dans un matériau de base translucide,
- le matériau de base est un matériau de base inorganique sans plomb (G) et
- les particules de diffusion (PI, P2) sont des particules de diffusion inorganiques,
**caractérisée en ce que** le matériau de base translucide est constitué d'oxyde d'aluminium et/ou de phosphate d'aluminium nanoporeux.

2. Ampoule (1; 11) selon la revendication 1, dans laquelle les particules de diffusion (P1, P2) présentent de l'oxyde d'aluminium (P1).

3. Ampoule (1; 11) selon la revendication 1, dans laquelle les particules de diffusion (P1, P2) présentent de l'oxyde de titane.

4. Ampoule (1; 11) selon la revendication 1, dans laquelle les particules de diffusion (P1, P2) présentent du phosphate, du borate ou du nitrure.

5. Ampoule (1; 11) selon l'une quelconque des revendications précédentes, dans laquelle les particules de diffusion (P1, P2) représentent entre 10 et 99,5 % en poids de la couche diffusant la lumière (4), en particulier entre 40 et 90 % en poids, en particulier entre 60 et 80 % en poids.

6. Ampoule (1; 11) selon l'une quelconque des revendications précédentes, dans laquelle une taille moyenne des particules de diffusion est entre 0,1 et 10 micromètres.

7. Ampoule (1; 11) selon l'une quelconque des revendications précédentes, dans laquelle la couche diffusant la lumière (4) est fournie au niveau d'un côté intérieur (3) du corps de base (2).

8. Ampoule (1; 11) selon l'une quelconque des revendications précédentes, dans laquelle la couche diffusant la lumière (4) est fournie au niveau d'un côté extérieur (13) du corps de base (2).

9. Lampe de remplacement à semi-conducteur (R1 ; R2 ; R3) avec une ampoule (1 ; 11), dans laquelle au moins un support (T) équipé d'au moins une source de lumière à semi-conducteur (D) est logé dans l'ampoule (1 ; 11) et dans laquelle l'ampoule est une ampoule (1 ; 11) selon l'une quelconque des revendications 1 à 8.

10. Lampe de remplacement à semi-conducteur (R1) selon la revendication 9, dans laquelle le support (T) repose sur l'ampoule (1).

11. Lampe de remplacement à semi-conducteur (R2 ; R3) selon la revendication 10, dans laquelle le support (T) repose sur l'ampoule (1) par le biais d'un corps de refroidissement (H).

12. Procédé de fabrication d'une ampoule (1; 11) selon l'une quelconque des revendications précédentes, dans lequel le procédé présente au moins les étapes suivantes :
- revêtement du corps de base (2) en verre avec un moyen de revêtement, lequel est un matériau de départ pour la fabrication de la couche diffusant la lumière (4) de l'ampoule (1 ; 11) ;
- séchage par section du moyen de revêtement pour la transformation en couche diffusant la lumière (4), dans lequel le séchage est réalisé avec un décalage temporel dans la direction d'écoulement du moyen de revêtement, et
- chauffage de l'ampoule (1 ; 11) d'environ 400 °C à 600 °C.
